# FASCICULE DE BREVET EUROPEEN

(11) **EP 2 939 966 B1**
(45) Date de publication et mention de la délivrance du brevet: **21.09.2016**
(21) Numéro de dépôt: 15001183.1
(22) Date de dépôt: 21.04.2015
(51) Int. Cl.: B65G 69/00, B65G 69/28

(54) **ÉQUIPEMENT D'ACCOSTAGE DE QUAI À BUTOIRS ESCAMOTABLES, PROCÉDÉ DE RÉALISATION**
VERLADEANLAGE MIT VERSENKBAREN ANSCHLÄGEN, HERSTELLUNGSVERFAHREN
DOCKING EQUIPMENT WITH RETRACTABLE BUMPERS, PRODUCTION METHOD

(30) Priorité: 02.05.2014 FR 1401019
(43) Date de publication de la demande: 04.11.2015
(73) Titulaire: Roere, Michel, 67720 Weyersheim (FR)
(72) Inventeur: Roere, Michel, 67720 Weyersheim (FR)
(74) Mandataire: Munier, Laurent

(56) Documents cités:
- EP-A1- 1 445 222
- WO-A1-2013/036606
- US-A1- 2006 137 261

## Description

La présente invention concerne les installations de quai de chargement, et plus particulièrement l'équipement de quai selon le préambule de la revendication 1.

Elle se rapporte en premier lieu à un équipement d'accostage avec butoirs de quai pour le transbordement du quai au véhicule ou à l'inverse, à savoir chargement ou déchargement du véhicule.

Pour un tel transbordement, les véhicules tels que les camions, remorques, plateau utilitaire ou autre, s'approchent suffisamment du quai de façon à ce que les chariots élévateurs puissent passer du véhicule au quai avec la marchandise à transborder.

D'où la nécessité pour assurer la sécurité des personnes qui se trouvent au pied du quai de garder un espace d'au moins 500mm entre le véhicule et le quai.

Cet espace forme alors une zone refuge anti écrasement.

De façon à permettre le passage des chariots élévateurs et du personnel manipulant les marchandises, il est prévu des ponts ou des lèvres de niveleurs qui viennent se poser sur le plateau du véhicule.

Certains dispositifs récents ont prévu une longueur suffisante pour aménager le refuge au pied du quai (voir le brevet n° FR 2 890 949au nom du demandeur) qui prévoit un niveleur barrière dans lequel cette barrière se déploie suffisamment à l'avant du quai formant pont jusqu'à des véhicules arrêtés à plus de 500mm devant le quai, ce qui permet de réaliser la zone refuge anti écrasement avec un butoir fixe qui empêche le véhicule de s'approcher suffisamment du quai. Le document EP-A-1 445 222 divulgue un équipement de quai selon le préambule de la revendication 1 et un procédé de réalisation d'un espace refuge selon le préambule de la revendication 5.

Cependant, dans la plupart des quais existants, un pont d'une telle longueur n'est pas prévu par conséquent, un butoir fixe empêcherait le véhicule de s'approcher suffisamment du quai pour le chargement et le déchargement du quai.

La majorité des niveleurs ne laisse pas la possibilité d'adjoindre une zone refuge.

En outre, les solutions connues avec pont de grande longueur présentent des inconvénients. Le véhicule est arrêté par les butoirs fixes qui présentent sur leur face d'arrêt des blocs de caoutchouc d'une dureté d'environ 50 shore.

Les chocs des camions arrivant sur ces faces d'arrêt sont transmis par le butoir jusqu'au quai et il arrive que des morceaux de béton se trouvent arrachés suite à ces chocs répétitifs ce qui à terme détruit le quai.

L'objet de la présente invention est d'obtenir une zone refuge tout en permettant le transbordement entre véhicule et quai dans les équipements existants.

L'invention vise à résoudre ces problèmes par la réalisation de la zone refuge lorsque le véhicule n'est pas en phase de transbordement et de permettre le transbordement lorsque la zone refuge n'est pas nécessaire.

Ainsi, l'équipement d'accostage de quai selon l'invention comprend au moins deux butoirs d'arrêt de véhicule placés sur la face avant du quai de manière à former un espace refuge entre lesdits deux butoirs et le quai. Lesdits butoirs sont gonflables via au moins un circuit et une canalisation d'alimentation en air commandée par des électrovannes liées à au moins un capteur de présence dans l'espace formé en espace refuge.

L'équipement escamotable d'accostage comprend des butoirs gonflables qui sont commandés par l'électrovanne qui est activée par le moyen de détection qui verrouille la rétractation desdits butoirs gonflables lorsqu'une personne est détectée en pied de quai, ainsi la zone refuge est formée.

Lesdits butoirs gonflables sont déployés en avant du quai formant la zone refuge de 500mm de profondeur.

A l'inverse, le transbordement devient possible quand les capteurs ne détectent plus de personne au pied du quai, l'espace est libre et les véhicules par leur reculs jusqu'au quai rétractent les butoirs gonflables jusqu'à la distance permettant le chargement ou déchargement.

Par sécurité, le recul du véhicule sera bloqué en cas de détection du capteur qui verrouillera la rétractation via l'électrovanne.

Le fonctionnement de l'équipement se faisant par gonflage ou retrait de l'air, évite d'utiliser un mécanisme. Les mécanismes permettant un déplacement mécanique de dispositif tels que des butoirs présentent des bielles, des barres ou autres ciseaux qui pourraient agripper les pieds des personnes tombées ou travaillant au pied du quai et l'invention présente aussi l'avantage d'éviter ce type d'accident dans la zone refuge.

De plus, l'invention permet d'amortir progressivement l'accostage du véhicule par une évacuation progressive de l'air pour préserver le quai.

Dans le but d'obtenir une rigidité suffisante des butoirs, l'équipement selon l'invention comprend des butoirs d'arrêt qui présentent une face rigide revêtue de caoutchouc placée sur plusieurs boudins gonflables rétractables fixés sur le quai.

Afin de pouvoir installer l'équipement selon l'invention n'importe où, le circuit d'alimentation en air des butoirs est un circuit fermé comprenant un moyen récupérateur et restituteur de l'air dans les butoirs.

En vue de simplifier la pose de l'équipement selon l'invention, l'air de l'alimentation des butoirs est obtenu depuis un compresseur ou le circuit d'air d'un bâtiment à proximité du quai.

L'invention a encore pour objet un procédé de réalisation d'un espace refuge temporaire au pied d'un quai de chargement existant pour au moins une personne se trouvant au pied du quai comprenant équipement de quai conforme à l'équipement décrit ci-dessus, selon la revendication 5.

L'espace refuge temporaire est obtenu par la réalisation des étapes suivantes :
- pose des butoirs gonflables sur la face avant du quai,
- réalisation d'un espace dans le quai
- pose d'au moins un coussin récupérateur et restituteur de l'air dans ledit espace,
- montage de canalisations de transport de l'air des butoirs au coussin récupérateur et restituteur,
- montage d'électrovannes liées à au moins un capteur de présence dans l'espace refuge entre les butoirs.

Suivant d'autres caractéristiques, le procédé de réalisation d'un espace refuge comporte les étapes suivantes :
- détection par le capteur d'une personne dans l'espace devant le quai entre les butoirs,
- déclenchement des électrovannes qui alimentent en air les butoirs et bloquent la sortie d'air desdits moyens,
- gonflage des butoirs allongés devant le quai formant la zone refuge anti écrasement,
- détection de l'absence de personne, donc partie,
- ouverture de l'évacuation d'air,
- arrivée pour transbordement d'un véhicule,
- amortissement du véhicule qui est ralenti puis arrêté à la distance de chargement par appui sur les butoirs rétractable au fur et à mesure du départ de l'air.

Un exemple non limitatif de mise en oeuvre de la présente invention va maintenant être décrit au regard des dessins annexés sur lesquels :
- La Fig. 1 est une vue en élévation arrachée présentant deux butoirs gonflables d'un circuit fermé selon l'invention présentant les butoirs gonflés et le coussin récupérateur et restituteur vide de son air installé dans le quai ;
- La Fig. 2 est une vue de dessus de l'équipement représentée figure 1 ;
- La Fig. 3 représentent les butoirs gonflables alimentés par source d'air comprimé existante ;
- La Fig. 4 est une vue en élévation arrachée présentant deux butoirs de la figure 1 rétractés ;
- La Fig. 5 est une vue en coupe de côté représentant l'accostage d'un véhicule sur l'équipement avec les butoirs selon l'invention ;
- La Fig 6 représente l'accostage du véhicule suite de la Fig. 5.

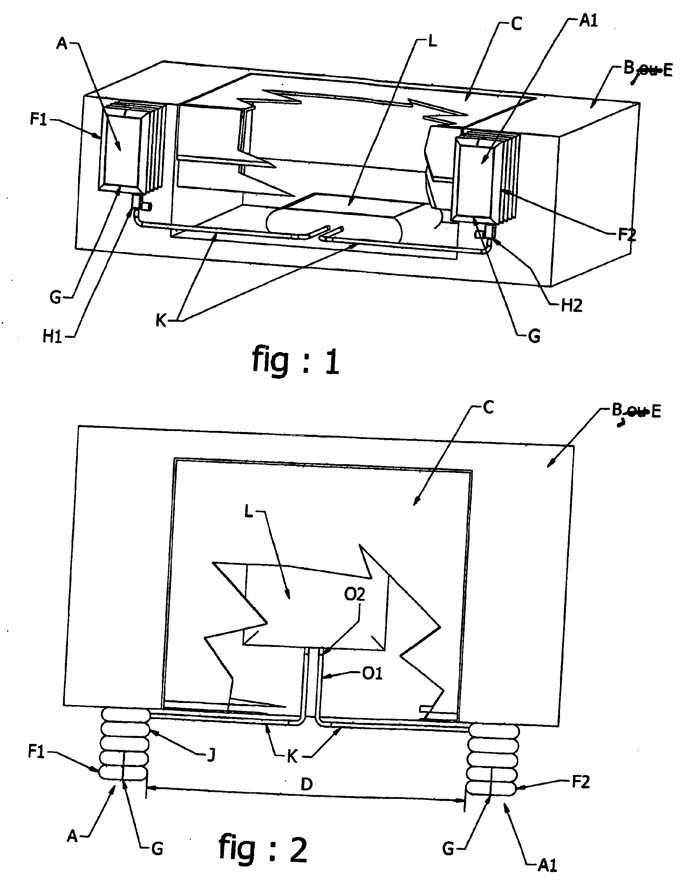

L'équipement d'accostage représenté sur les figures 1 et 2 comprend des butoirs A1, A2 de quai B, contrôlant l'accostage des véhicules avant les opérations de transbordement.

Ces butoirs A1, A2, placés de part et d'autres d'un système de mise à niveau C de type connu tel qu'un niveleur. Par exemple certains niveleurs hydrauliques C de quai B de chargement présentent une portion d'extrémité côté véhicule à charger avec une première face longitudinale plate mobile de prolongation de la plate-forme et dudit quai en position de travail ou chargement de véhicule. La face plate est en prolongation du niveleur C vers le plateau du véhicule en position travail (voir FR 2 890 949 au nom du demandeur).

Dans l'équipement représenté sur les Fig. 1 et 2, l'écartement D entre les deux butoirs A1, A2 correspond à la largeur hors tout des véhicules, à savoir de 2200 à 2400 mm, Le système de mise à niveau C est incorporé dans un quai B ou une structure indépendante E.

Ces butoirs A1, A2 sont réalisés à partir de boudins gonflables en matière extensible F1, F2.

Ils sont équipés :
- d'une plaque de contact G pour protéger les boudins F1, F2 des aspérités des véhicules. Cette plaque G est placée à l'avant de chaque boudin gonflable F1, F2.
- D'un dispositif de fermeture électrique H de flux d'air comprimé asservi à un système de détection de présence J, incorporé dans le ou les butoirs A1, A2.

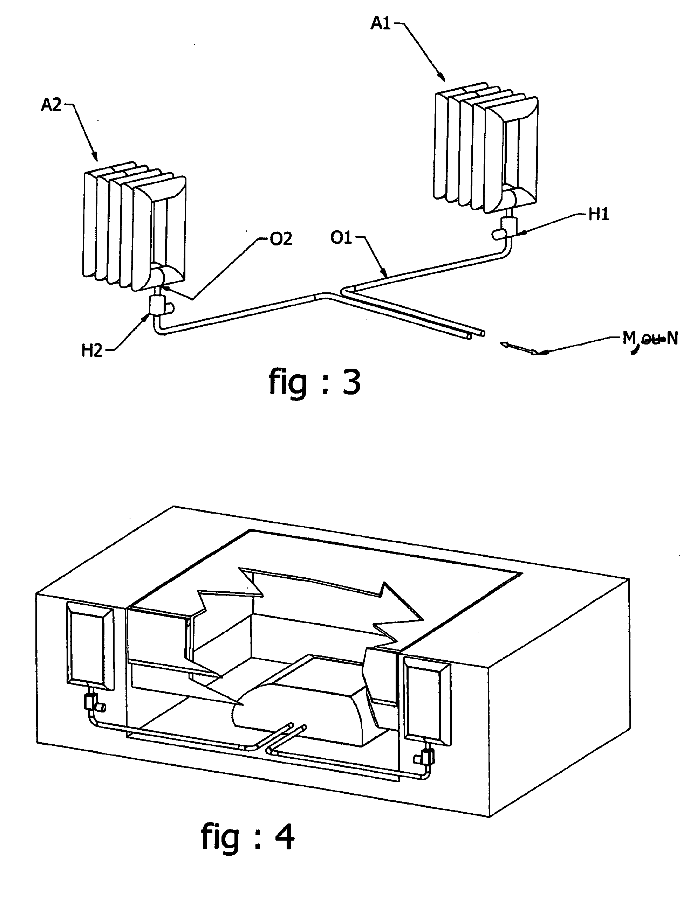

Ces butoirs A1, A2 sont alimentés en air comprimé :
- soit par un système autonome K, comprenant un coussin récupérateur L, placé par exemple sous le système de mise à niveau C, l'ensemble fonctionnant en circuit fermé K dans la variante de réalisation représentée sur les Fig. 1 et 2
- Soit par une source d'air comprimé existante M ou alors par un compresseur indépendant N selon la variante de réalisation représentée Fig. 3 Les canalisations O, prévues pour le passage de l'air comprimé I, sont du type classique, à savoir qu'il s'agit selon une première variante réalisation d'un circuit de canalisations rigides 01 pour éviter que les canalisations ne soient compressées et déformées lors de l'arrivée extérieure d'un objet tel que butoir, camion, morceau de quai ou autre. Selon une autre variante pour s'adapter à un parcours compliqué, les canalisations sont souples 02. Enfin dans les cas où ces difficultés apparaissent alternativement à différent endroits du circuit, les canalisations présente une combinaison de tuyaux rigides et souples 03.

Le fonctionnement de l'équipement selon l'invention est le suivant :

En position repos ou d'attente, les butoirs A1, A2 sont gonflés, garantissant, même sous pression d'un camion une zone refuge de 500 mm de profondeur P.

En l'absence de présence humaine ou animale, et au moment de l'accostage, les butoirs A1, A2 poussés par le véhicule vont faire refluer l'air, contenue dans leur boudins F1, F2 vers soit :
- Le coussin récupérateur L qui va se gonfler de l'air éjecté dans la variante représentée Fig. : 4
- S'échapper dans l'atmosphère par une valve Q sensible à la surpression dans la variante selon la Fig. : 3

Mais si une présence humaine ou animale R se trouve dans la zone refuge P (située entre les butoirs A1, A2), le système de fermeture piloté par la détection, va :
- Premièrement empêcher le reflux de l'air, empêchant également le recul du camion S
- Deuxièmement actionner une alarme visuelle ou sonore

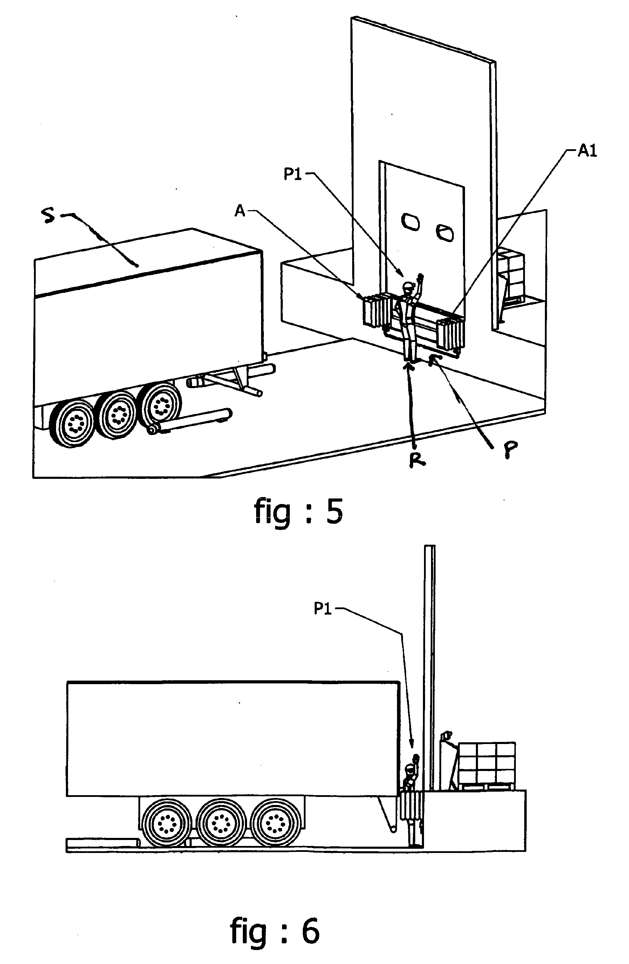

Ces deux actions simultanées vont empêcher l'écrasement de l'humain ou de l'animal R représenté Fig. 5 et 6 et l'accostage final du véhicule S ne pourra se faire que si la zone de refuge P se retrouve libre.

L'objet de l'invention résulte de la norme NF EN 349 et la recommandation de l'INRS/CRAM ED6059 qui préconisent la création, devant les systèmes de mise à niveaux C, d'une zone refuge P de 500 mm de profondeur.

Mais en général, les lèvres ou les becs des ponts qui doivent se poser sur les planchers des camions ne dépassent pas de 300 à 500 mm de longueur, ce qui compte tenu de la profondeur de la zone refuge ne permet pas, aux mise à niveaux classiques de se poser sur le plancher des camions, d'autant plus que les véhicules S eux-mêmes sont équipés de butées d'au moins 100 mm. Il en résulte, l'impossibilité des opérations de transbordement.

Il a été rappelé plus haut que certains nouveaux système de chargement ont incorporés dans leur conception cette nouvelle exigence....lèvres rabattantes ou télescopique plus longue, ou extension du plateau par effacement d'obstacle.

Mais cela est limité aux nouveaux équipements, car cette solution demande un changement complet du matériel. Ce qui est compliqué et onéreux.

Le système selon l'invention va permettre d'augmenter la sécurité autour des quais B équipés de mise à niveaux classiques, sans obliger au changement.

La Fig. 5 explique l'utilité de la zone refuge en montrant une personne P1 en train d'essayer d'attirer les personnels à l'intérieur de l'entrepôt, pendant qu'un chauffeur amorce sa manoeuvre d'accostage.

De plus, l'accostage sera plus progressif (le reflux de l'air ayant une action de freinage), préservant de ce fait, l'intégrité des structures supportant les mises à niveaux C et également l'arrière des véhicules S.

### Signes de référence

- A, A1: Butoir
- A2: Butoir
- B: Quai
- C: Système de mise à niveau ou niveleur
- D: Ecartement entre les butoirs
- E: Structure indépendante
- F1: Boudin gonflable
- F2: Boudin gonflable
- G: Plaque de contact
- H1, H2: Dispositif de fermeture électrique de

- J: Système de détection de présence
- K: Système autonome, comprenant un coussin récupérateur
- L: Coussin récupérateur
- M: Source d'air comprimé existante
- N: Compresseur indépendant
- O: Canalisations rigides
- O1: Canalisations rigides
- O2: Canalisations souples
- O3: Canalisations à combinaison de tuyaux rigides et souples
- P: Zone refuge
- P1: Personne
- Q: Valve
- R: Présence humaine ou animale
- S: Véhicule

Les signes de référence insérés après les caractéristiques techniques mentionnées dans les revendications ont pour seul but de faciliter la compréhension de ces dernières.

## Revendications

1. Équipement d'accostage de quai (B) comprenant au moins deux butoirs (A1, A2) d'arrêt de véhicule placés sur la face avant du quai (B) de manière à former un espace refuge entre lesdits deux butoirs et le quai **caractérisé en ce que** lesdits butoirs (A1, A2) sont gonflables via au moins un circuit et une canalisation d'alimentation en air commandée par des électrovannes liées à au moins un capteur de présence dans l'espace formé en espace refuge (P).

2. Équipement selon la revendication 1 dans lequel les butoirs (A1, A2) présentent une face rigide revêtue de caoutchouc placée sur plusieurs boudins gonflables rétractables (F1, F2) fixés sur le quai (B).

3. Équipement selon l'une quelconque des revendications précédentes dans lequel le circuit d'alimentation en air des butoirs (A1, A2) est un circuit fermé comprenant un moyen (L) récupérateur et restituteur de l'air dans les butoirs.

4. Équipement selon l'une des revendications 1 ou 2 dans lequel l'air de l'alimentation des butoirs est obtenu depuis un compresseur (N) ou le circuit d'air d'un bâtiment (M) à proximité du quai.

5. Procédé de réalisation d'un espace refuge temporaire au pied d'un quai de chargement existant pour au moins une personne se trouvant au pied du quai comprenant équipement de quai conforme à l'une quelconque des revendications 1 à 3, **caractérisé par** l'installation suivant les étapes suivantes :
- pose des butoirs gonflables (A1, A2) sur la face avant du quai (B),
- realisation d'un espace dans le quai,
- pose d'au moins un coussin récupérateur et restituteur de l'air, dans ledit espace,
- montage des canalisations de transport de l'air des butoirs (A1, A2) au coussin récupérateur et restituteur (L),
- montage des électrovannes liées à au moins un capteur de présence (R) dans l'espace refuge (P) entre les butoirs (A1, A2).

6. Procédé de réalisation d'un espace refuge temporaire (P) selon la revendication précédente comportant les étapes suivantes :
- détection par le capteur d'une personne ou un animal dans l'espace devant le quai (B) entre les butoirs (A1, A2),
- déclenchement des électrovannes qui alimentent en air les butoirs (A1, A2) et bloquent la sortie d'air desdits moyens,
- gonflage des butoirs (A1, A2) allongés devant le quai (B) formant la zone refuge anti écrasement (P),
- détection de l'absence de personne, donc partie,
- ouverture de l'évacuation d'air,
- arrivée pour transbordement d'un véhicule (S),
- amortissement du véhicule (S) qui est ralenti puis arrêté à la distance de chargement par appui sur les butoirs rétractables (A1, A2) au fur et à mesure du départ de l'air.

## Patentansprüche

1. Vorrichtung zur Be- und Entladung an einer Rampe (B) mit wenigstens zwei Prellböcken (A1, A2) für Fahrzeuge, die auf der Vorderseite der Rampe (B) angeordnet sind, derart, dass sie einen Fluchtraum zwischen den zwei Prellböcken und der Rampe bilden, **dadurch gekennzeichnet, dass** die Prellböcke (A1, A2) über wenigstens einen Kreislauf und eine Luftversorgungkanalisation aufblasbar sind, die durch Magnetventile gesteuerte werden, welche mit wenigstens einem Anwesenheitssensor in dem als Fluchtraum (P) gebildeten Raum verbunden sind.

2. Vorrichtung nach Anspruch 1, in welcher die Prellböcke (A1, A2) eine mit Gummi verkleidete steife Fläche aufweisen, die über mehreren zurückziehbaren, aufblasbaren Strängen, die auf der Rampe (B) befestigt sind, angeordnet ist.

3. Vorrichtung nach einem der vorhergehenden Ansprüche, in welcher der Luftversorgungskreislauf für die Prellböcke (A1, A2) ein geschlossener Kreislauf ist, der eine Luftwiederverwertung- und Wiedergewinnungseinrichtung (L) in den Prellböcken umfasst.

4. Vorrichtung nach einem der Ansprüche 1 oder 2, in welcher die Versorgungsluft der Prellböcke von einem Kompressor (N) oder dem Luftkreislauf eines Gebäudes (M) in der Nähe der Rampe erhalten wird.

5. Verfahren zur Herstellung eines temporären Fluchtraums am Fuß einer Laderampe für wenigstens eine Person, die sich am Fuß der Rampe befindet, mit einer Vorrichtung für die Rampe nach einem der Ansprüche 1 bis 3, **gekennzeichnet durch** die Installation nach den folgenden Schritten:
- Anordnen der aufblasbaren Prellböcke (A1, A2) an der Vorderseite der Rampe (B),
- Herstellung eines Raums in der Rampe,
- Anordnen wenigstens eines Kissens zur Wiedergewinnung oder Rückrührung von Luft in dem Raum,
- Anbringen der Lufttransportkanäle der Prellböcke (A1, A2) an dem Wiedergewinnungs- und Rückführungskissen (L),
- Anbringen von Magnetventilen, die mit wenigstens einem Anwesenheitssensor (R) verbunden sind, im Fluchtraum (P) zwischen den Prellböcken (A1, A2).

6. Verfahren zur Herstellung eines temporären Fluchtraums (P) nach dem vorhergehenden Anspruch, mit den folgenden Schritten:
- Erfassung einer Person oder eines Tieres durch den Sensor, im Raum vor der Rampe (B) zwischen den Prellböcken (A1, A2),
- Auslösung der Magnetventile, welche die Prellböcke (A1, A2) mit Luft versorgen und den Luftausgang der Einrichtung blockieren,
- Aufblasen der länglichen Prellböcke (A1, A2) vor der Rampe (B), um die Quetschschutz-Fluchtzone (P) zu bilden,
- Erfassung des Nicht-Vorhandenseins einer Person in dem Bereich,
- Öffnung der Luftevakuierung,
- Ankunft eines Fahrzeugs (S) zur Umladung,
- Stoßdämpfung des Fahrzeugs (S), das sich durch Anschlag an die zurückziehbaren Prellböcke (A1, A2) bis zum Halt in dem Ladeabstand in dem Maße der Luftentweichung verlangsamt.

## Claims

1. Docking equipment for a loading dock (B) comprising at least two bumpers (A1, A2) for stopping a vehicle, placed on the front of the dock (B) in order to form a refuge space between said two bumpers and the dock **characterised in that** said bumpers (A1, A2) are inflatable via at least one air circuit and air supply pipe controlled by solenoid valves connected to at least one presence sensor in the gap forming the refuge space (P).

2. Equipment according to claim 1 in which the bumpers (A1, A2) have a rigid front panel covered in rubber placed on several retractable inflatable chambers (F1, F2) fixed onto the dock (B).

3. Equipment according to any of the preceding claims in which the circuit supplying air to the bumpers (A1, A2) is a closed circuit comprising a device (L) for recovering and returning the air from and to the bumpers.

4. Equipment according to either claim 1 or claim 2 in which the air supplied to the bumpers is provided by a compressor (N) or the air circuit of a building (M) near the dock.

5. Method for creating a temporary refuge space at the foot of an existing loading dock for at least one person standing at the foot of the dock comprising dock equipment consistent with any one of claims 1 to 3, **characterised by** installation according to the following steps:
- installation of the inflatable bumpers (A1, A2) on the front of the dock (B),
- creation of a gap in the dock,
- installation of at least one air recovery and return cushion, in said space,
- assembly of the pipes carrying the air from the bumpers (A1, A2) to the air recovery and return cushion (L),
- fitting of the solenoid valves connected to at least one presence sensor (R) in the refuge space (P) between the bumpers (A1, A2).

6. Method for creating a temporary refuge space (P) according to the previous claim comprising the following steps:
- detection by the sensor of a person or an animal in the space in front of the dock (B) between the bumpers (A1, A2),
- triggering of the solenoid valves that supply the bumpers (A1, A2) with air and prevent the air leaving said means,
- inflation of the bumpers (A1, A2) along the front of the dock (B) forming the anti-crushing refuge space (P),
- detection of the absence of a person, who has then left the space,
- opening of the air outlet,
- arrival of a vehicle (S) for loading/unloading,
- damping of the vehicle (S) which is slowed down then stopped at the loading distance by pressing on the retractable bumpers (A1, A2) as the air gradually leaves the bumpers.
